# EUROPEAN PATENT APPLICATION

(11) **EP 4 772 376 A1**
(43) Date of publication of application: **08.07.2026**
(21) Application number: 24863219.2
(22) Date of filing: 05.09.2024
(51) Int. Cl.: B60K 11/04, F01P 5/02, F01P 3/18, E02F 9/08

(54) **COOLING DEVICE AND CONSTRUCTION MACHINE COMPRISING SAME**

(30) Priority: 06.09.2023 KR 20230118269
(71) Applicant: HD Hyundai Infracore Co., Ltd., Incheon 22502 (KR)
(72) Inventor: YU, Jaehyun, Seongnam-si, Gyeonggi-do 13610 (KR); LIM, Kyehyun, Incheon 21441 (KR); LEE, Youngjae, Seoul 07388 (KR)
(74) Representative: Isarpatent
(86) International application number: PCT/KR2024/013413
(87) International publication number: WO 2025/053640

(57) **Abstract**

The present invention relates to a cooling device and a construction machine comprising same. A cooling device and a construction machine comprising same are provided. The cooling device for cooling an engine room whose temperature increases according to an operation of an engine disposed in the engine room includes a fan for discharging air of the engine room to the outside, a radiator through which the air of the engine room moved by the fan passes, and a backflow prevention unit spaced apart from the fan with the radiator at a center thereof to prevent a backflow of the air moved by the fan.

## Description

### [TECHNICAL FIELD]

An embodiment of the present invention relates to a cooling device and a construction machine comprising same, and more specifically, to a cooling device that cools an engine room of the construction machine by discharging air from the engine room to the outside, and a construction machine comprising same.

### [BACKGROUND ART]

Typically, small construction machines have limited engine room spaces. Therefore, the engine room is disposed adjacent to a cabin.

In such a case, there is a problem in which heat from the engine room is transmitted to the cabin where a driver is located. Specifically, when the engine room air heated according to an operation of an engine is transmitted to the cabin, there is a problem in that the driver must operate an air conditioning unit inside the cabin to reduce a feeling of heat.

Alternatively, when manufacturing the construction machine, a distance between the engine room and the cabin must be increased, a configuration for preventing heat transfer must be added, or a space for an installation thereof must be secured.

However, in small construction machines, a space for forming the engine room is limited, so there are restrictions on an arrangement structure between the engine room and the cabin.

Therefore, a configuration capable of cooling the air of the engine room within a narrow space is required.

### [SUMMARY OF THE INVENTION]

### [TECHNICAL PROBLEM]

An embodiment of the present invention provides a cooling device capable of cooling an engine room by discharging air of the engine room to the outside, and a construction machine comprising same.

### [TECHNICAL SOLUTION]

According to an embodiment of the present invention, a cooling device for cooling an engine room whose temperature increases according to an operation of an engine disposed in the engine room includes a fan for discharging air of the engine room to the outside, a radiator through which the air of the engine room moved by the fan passes, and a backflow prevention unit spaced apart from the fan with the radiator at a center thereof to prevent a backflow of the air moved by the fan.

In addition, the backflow prevention unit includes a baffle supported by the radiator and having at least one region disposed coaxially with a rotation center of the fan.

In addition, the backflow prevention unit may further include a main bracket supported by the radiator to support the baffle, and a support bracket formed on one side of the baffle to support a reserve tank.

In addition, the above-described cooling device may further include a shroud supported by the radiator to guide the air of the engine room moved by the fan to move to the radiator.

In addition, the fan may be rotated by the engine.

Alternatively, according to an embodiment of the present invention, a construction machine includes an upper body, a cabin installed on the upper body and in which a driver's seat for a driver to ride is disposed, a hood disposed on the upper body to be partitioned from the cabin, an engine room in which an engine is disposed inside the hood, a discharge port formed to include at least one region among side surfaces of the hood, and a cooling device including a fan disposed inside the hood communicating with the discharge port to discharge air of the engine room to the discharge port to cool the engine room and operated by the engine, a radiator cooled by the air supplied from the engine room according to an operation of the fan, and a backflow prevention unit disposed coaxially with a rotation center of the fan and spaced apart from the fan with the radiator at a center thereof to prevent the air from flowing backward toward the fan.

In addition, the above-described construction machine may further include an inlet formed by opening one region of a lower portion of the engine room to guide outside air to flow into the engine room when the cooling device operates.

In addition, the engine may be disposed inside the hood behind the driver's seat.

### [ADVANTAGEOUS EFFECTS OF THE INVENTION]

According to embodiments of the present invention, a cooling device and a construction machine comprising same may cool an engine room by discharging air of the engine room to the outside, thereby reducing a transfer of a feeling of heat caused by the heated air of the engine room to a driver.

### [BRIEF DESCRIPTION OF DRAWINGS]

FIG. 1 is a perspective view showing a construction machine viewed from below according to an embodiment of the present invention.
FIG. 2 is an enlarged view of one region of a lower portion of a construction machine according to an embodiment of the present invention.
FIG. 3 is a side view of a construction machine according to an embodiment of the present invention.
FIG. 4 is a view showing a part of a cooling device according to an embodiment of the present invention.
FIG. 5 is a perspective view showing a part of a cooling device according to an embodiment of the present invention.
FIG. 6 is a cross-sectional view of a cooling device according to an embodiment of the present invention.
FIG. 7 is a view showing an internal structure of an upper body of a construction machine from which a cabin is omitted according to an embodiment of the present invention.
FIG. 8 is a view showing a radiator, a shroud, and a fan according to an embodiment of the present invention.

### [MODES FOR CARRYING OUT THE INVENTION]

Hereinafter, embodiments of the present invention will be described in detail with reference to the accompanying drawings so that a person having ordinary skill in the art to which the present invention pertains can readily implement them. The present invention may be implemented in various different forms and is not limited to the embodiments described herein.

It is noted that the drawings are schematic and not drawn to scale. The relative dimensions and proportions of parts in the drawings may be exaggerated or reduced in size for clarity and convenience in the drawings, and any dimensions are merely exemplary and not limiting. Furthermore, when identical structural elements or parts appear in more than one drawing, the same reference numerals are used to indicate similar features.

The embodiments of the present invention specifically illustrate ideal embodiments of the present invention. As a result, various modifications of the illustrations are expected. Therefore, the embodiments are not limited to the specific shapes of the regions shown, but also include, for example, variations in shape resulting from manufacturing.

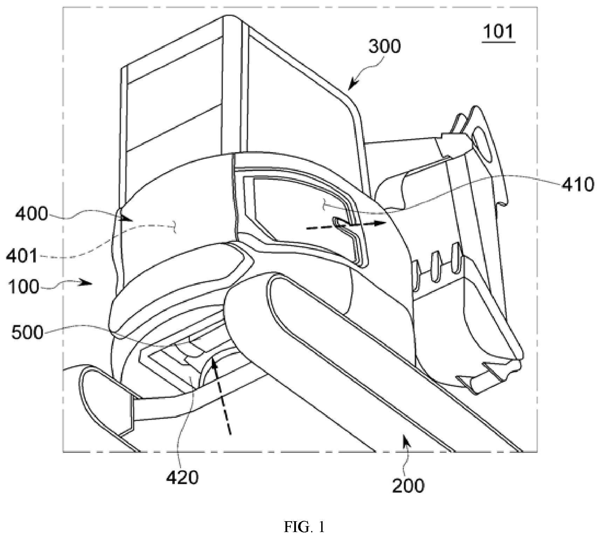

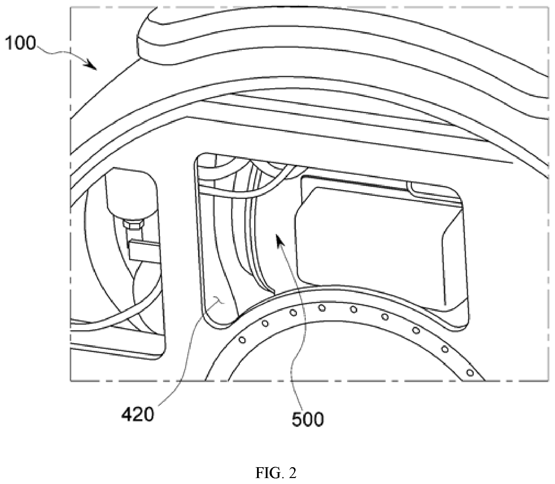

Hereinafter, a cooling device 600 according to an embodiment of the present invention will be described with reference to FIGS. 1 to 8.

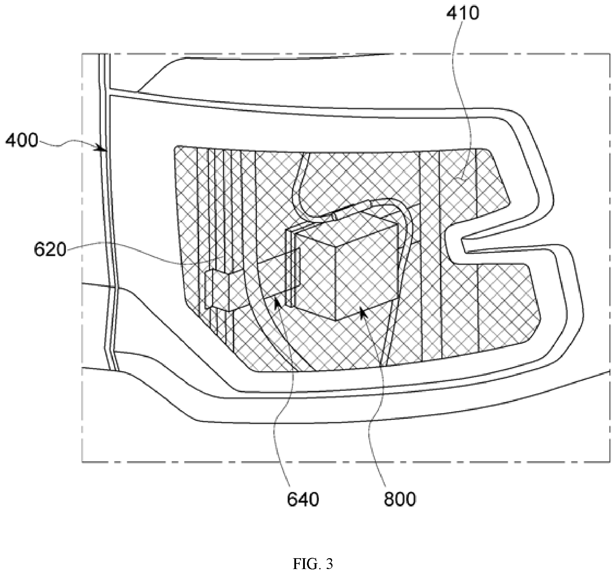

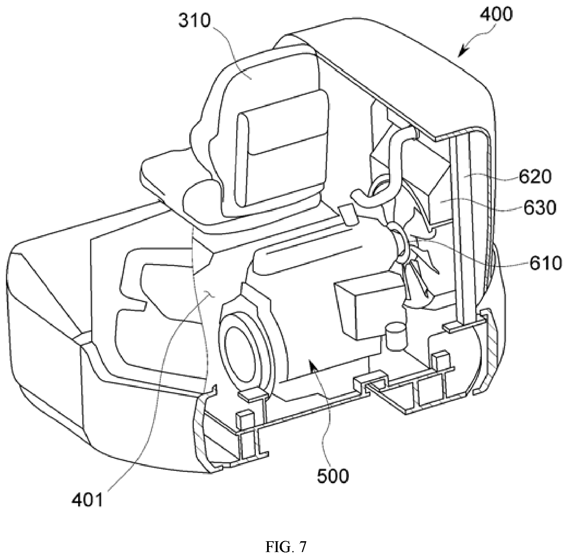

As shown in FIGS. 3 to 8, the cooling device 600 according to an embodiment of the present invention includes a fan 610, a radiator 620, and a backflow prevention unit 640. Specifically, as shown in FIGS. 1 and 7, the cooling device 600 cools an engine 500 installed in an engine room 401. That is, the cooling device 600 may cool a temperature of air in the engine room 401 in which the engine 500 is disposed.

The fan 610 discharges air of the engine room 401 to the outside. Specifically, the fan 610 rotates and discharges the air of the engine room 401 heated according to an operation of the engine 500 to the outside, thereby preventing a temperature rise of the engine room 401 and a temperature rise of the engine 500 caused by the heated air of the engine room 401.

The air of the engine room 401 moved by the fan 610 passes through the radiator 620. The air of the engine room 401 exchanges heat with coolant circulating inside the radiator 620 by the fan 610 and is discharged to the outside.

In addition, the radiator 620 allows coolant to pass through an inside thereof and may be provided for cooling the engine 500. Specifically, the coolant passing through the radiator 620 may be cooled through heat exchange with air to cool the engine 500.

The backflow prevention unit 640 is disposed to be spaced apart from the fan 610. In addition, the backflow prevention unit 640 prevents a backflow in which the air discharged from the engine room 401 by the fan 610 and coming into contact with the radiator 620 flows back toward the engine room 401 through the radiator 620. Specifically, the fan 610 and the backflow prevention unit 640 are disposed to be spaced apart from each other with the radiator 620 as a center.

Accordingly, as shown in FIGS. 1 to 8, the cooling device 600 according to an embodiment of the present invention may effectively discharge the air of the engine room 401 to the outside of the engine room 401 by the backflow prevention unit 640, thereby lowering a temperature inside the engine room 401.

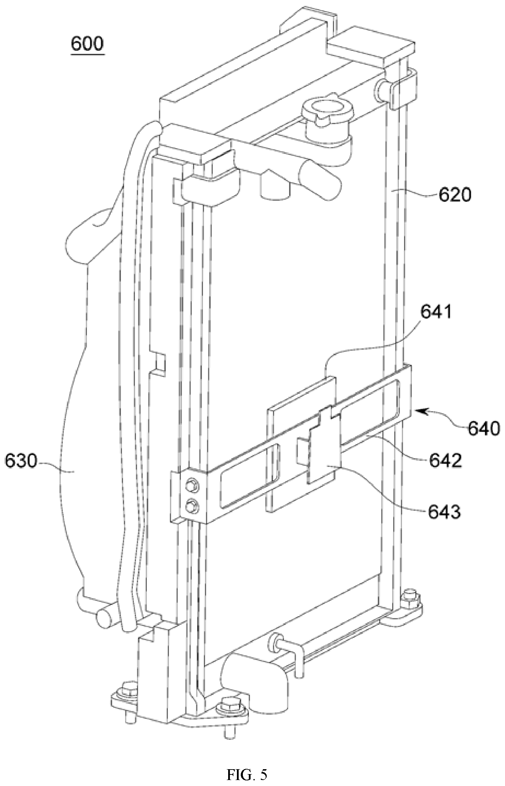

In addition, as shown in FIG. 5, the backflow prevention unit 640 according to an embodiment of the present invention may include a baffle 641.

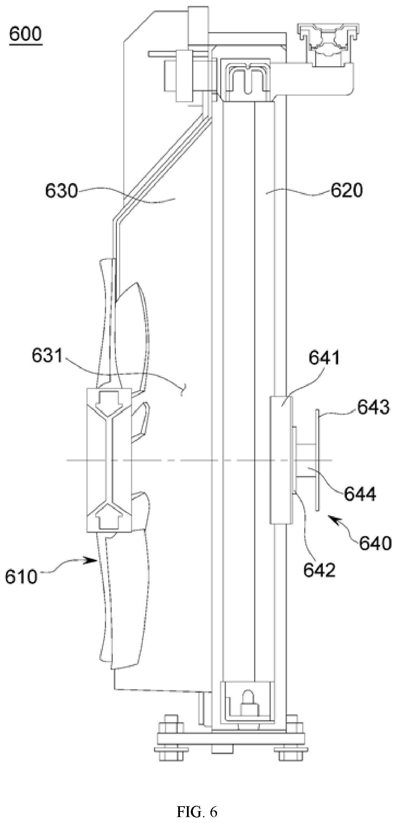

The baffle 641 may be supported by the radiator 620. In addition, as shown in FIG. 6, at least one region of the baffle 641 may be disposed coaxially with a rotation center of the fan 610. Specifically, the baffle 641 may prevent the air of the engine room 401 having passed through the radiator 620 from flowing into the radiator 620 again to increase a temperature due to a backflow phenomenon occurring coaxially with the rotation center of the fan 610. That is, the baffle 641 may effectively prevent the heated air from being re-introduced into the engine room 401 coaxially with the rotation center of the fan 610.

For example, a foam may be coupled to one surface of the baffle 641 facing the radiator 620 to prevent a backflow according to a flow of air.

In addition, as shown in FIGS. 5 to 7, the baffle 641 is disposed to be spaced apart from the fan 610 with the radiator 620 as a center, thereby preventing a part of the air of the engine room 401 discharged toward the outside according to a rotation of the fan 610 from being re-introduced toward the engine room 401 after passing through the radiator 620.

Therefore, the baffle 641 may prevent the air, which has increased in temperature in the engine room 401 and cooled the radiator 620, from being re-introduced toward the engine room 401 again due to a relatively low flow velocity at a rotation center portion of the fan 610.

In addition, as shown in FIGS. 5 and 6, the backflow prevention unit 640 according to an embodiment of the present invention may further include a main bracket 642 and a support bracket 643.

The main bracket 642 may be supported by the radiator 620. In addition, the main bracket 642 may support the baffle 641. Specifically, the main bracket 642 may support the baffle 641 so that the baffle 641 is disposed coaxially with the rotation center of the fan 610.

As shown in FIGS. 3 to 6, the support bracket 643 is disposed on one side of the baffle 641 and may form a space and an installation area to support a reserve tank 800. Specifically, the support bracket 643 is disposed to be spaced apart from the baffle 641 with the main bracket 642 as a center and may be formed to support the reserve tank 800. That is, the main bracket 642 may support the support bracket 643 and the baffle 641.

For example, as shown in FIG. 6, the support bracket 643 is connected to the baffle 641 by a connection member 644, and the main bracket 642 and the support bracket 643 may be supported to be spaced apart by the connection member 644.

Coolant passing through the radiator 620 is stored inside the reserve tank 800. Specifically, the coolant stored in the reserve tank 800 passes through the radiator 620, is cooled through heat exchange, and is supplied to the engine 500 to cool the engine 500.

Therefore, the backflow prevention unit 640 may provide not only backflow prevention but also an installation area for the reserve tank 800. That is, by an arrangement structure of the backflow prevention unit 640, an installation space for the reserve tank 800 is secured so that the reserve tank 800 may be compactly installed in the hood 400.

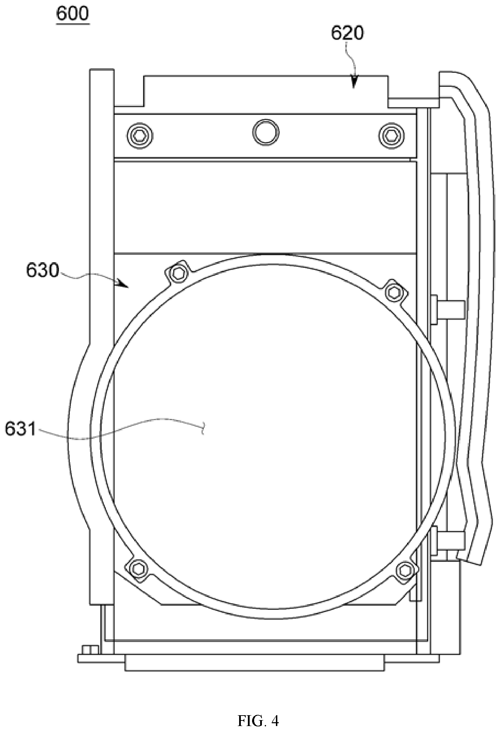

In addition, as shown in FIGS. 4 to 8, the cooling device 600 according to an embodiment of the present invention may further include a shroud 630.

The shroud 630 may be supported by the radiator 620. In addition, the shroud 630 may guide the air of the engine room 401 moved by the fan 610 to move to the radiator 620. Specifically, the shroud 630 may include a through-hole 631 formed at a center thereof, and an inclined region 632 formed such that a region of an outside extends in a direction inclined toward the fan 610.

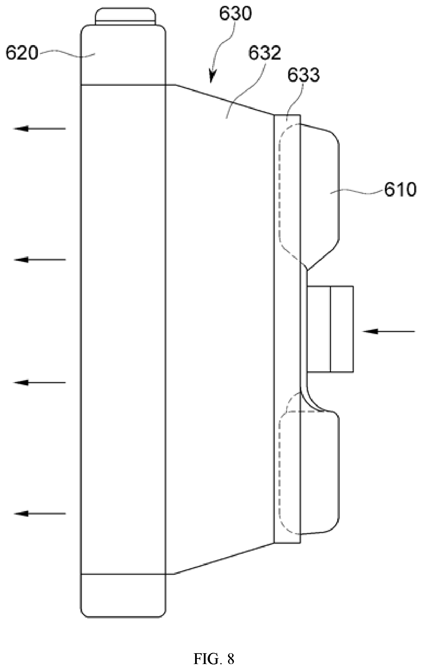

As shown in FIG. 8, at least a portion of the fan 610 may be disposed inside the shroud 630. Specifically, the shroud 630 includes a protruding region 633 connected to the inclined region 632, and at least a portion of the fan 610 may be disposed within the protruding region 633.

In addition, as shown in FIGS. 6 and 8, one end of the fan 610 and an inner circumference of the through-hole 631 may be disposed to be spaced apart.

Therefore, the shroud 630 may guide the air of the engine room 401 to be effectively discharged toward the radiator 620.

In addition, the fan 610 of the cooling device 600 according to an embodiment of the present invention may be rotated by the engine 500.

The fan 610 is connected to the engine 500 and may be rotated during an operation of the engine 500. Specifically, the fan 610 may be rotated during the operation of the engine 500 to discharge the air of the engine room 401 to the outside, thereby effectively cooling not only the air inside the engine room 401 but also the radiator 620.

By such a configuration, the cooling device 600 according to an embodiment of the present invention may discharge the air of the engine room 401 to the outside to effectively lower a temperature of the air of the engine room 401.

Hereinafter, a construction machine 101 according to an embodiment of the present invention will be described with reference to FIGS. 1 to 8.

As shown in FIGS. 1 to 8, the construction machine 101 according to an embodiment of the present invention includes an upper body 100, a cabin 300, a hood 400, an engine room 401, a discharge port 410, and a cooling device 600.

The upper body 100 is supported by a traveling body 200. In addition, the traveling body 200 and the upper body 100 are rotatably connected, so that the upper body 100 may rotate around the traveling body 200 to perform work.

The cabin 300 is installed on the upper body 100. In addition, a driver's seat 310 in which a driver is seated is disposed inside the cabin 300. In addition, a manipulation unit capable of operating the construction machine 101 or a display device allowing the driver to recognize a state of such an operation may be installed in the cabin 300.

The hood 400 may be disposed on the upper body 100. In addition, the hood 400 is disposed on the upper body 100 to be partitioned from the cabin 300. In addition, the hood 400 may form a part of an exterior of the construction machine 101.

The engine room 401 is formed inside the hood 400. In addition, the engine room 401 is installed on the upper body 100 that supports the cabin 300. The engine room 401 may be formed on the upper body 100 separated from the cabin 300. In addition, an engine 500 is disposed inside the engine room 401. The engine 500 may provide power for the construction machine 101 to drive or operate. Specifically, the engine 500 may provide power to operate a hydraulic pump, a motor, or the like so that the construction machine 101 may work.

The engine room 401 may be disposed adjacent to a driver's seat 310 installed in the cabin 300.

The discharge port 410 may be formed to include at least one region among side surfaces of the hood 400. In addition, the discharge port 410 may be formed to include a part of the side surface of the hood 400. Specifically, the discharge port 410 may be formed in the hood 400 so that the engine room 401 communicates with the outside.

The cooling device 600 is disposed inside the hood 400 communicating with the discharge port 410. In addition, the cooling device 600 cools the engine room 401 by discharging the air of the engine room 401 to the discharge port 410.

According to such a configuration, the construction machine 101 according to an embodiment of the present invention may discharge the air of the engine room 401 to the discharge port 410 to cool the engine room 401.

In addition, the construction machine 101 according to an embodiment of the present invention may further include an inlet 420.

The inlet 420 may be formed by opening one region of a lower portion of the engine room 401. In addition, the inlet 420 may guide outside air to flow into the engine room 401. In addition, when the cooling device 600 operates, the outside air may be introduced from the inlet 420, and the air of the engine room 401 may be discharged to the outside through the discharge port 410.

That is, the inlet 420 and the discharge port 410 may be formed in directions intersecting each other.

Accordingly, a temperature of the air inside the engine room 401 may be lowered by being discharged to the outside through the discharge port 410 according to the operation of the cooling device 600. In addition, since the cooling device 600 may cool the temperature inside the engine room 401 disposed adjacent to the driver's seat 310, it is possible to effectively prevent the temperature of the heated air of the engine room 401 from being transferred to the driver.

In addition, the cooling device 600 of the construction machine 101 according to an embodiment of the present invention may further include a fan 610 and a radiator 620.

The fan 610 may be operated by the engine 500. Specifically, the fan 610 is connected to the engine 500 and may be rotated together during the operation of the engine 500.

The radiator 620 allows coolant to pass through an inside thereof, and is cooled by the air supplied from the engine room 401 according to the operation of the fan 610.

The cooling device 600 of the construction machine 101 according to an embodiment of the present invention may be formed to have the same configuration as the cooling device 600 described above.

In addition, the engine 500 of the construction machine 101 according to an embodiment of the present invention may be disposed inside the hood 400 behind the driver's seat 310.

The engine 500 may be disposed inside the hood 400 behind the driver's seat 310. Specifically, the engine 500 may be disposed inside the engine room 401 behind the driver's seat 310, so that the construction machine 101 may reduce an influence that the heated air from the engine room 401 formed adjacent to the driver's seat 310 may have on the driver.

The cooling device 600 may effectively reduce a feeling of heat of the engine room 401 felt by the driver due to the heated internal air of the engine room 401 of the small construction machine 101 formed in an area adjacent to the driver's seat 310. Therefore, during a work of the construction machine 101, the driver may stably operate the construction machine 101 without being affected by the heated warmth of the engine room 401 inside the cabin 300.

For example, a center of the driver's seat 310 and a center of the engine 500 may be disposed side by side in a direction parallel to a longitudinal direction of the construction machine 101.

Alternatively, at least one region of the engine 500 may be disposed inside the upper body 100 lower than the driver's seat 310.

In addition, the cooling device 600 of the construction machine 101 according to an embodiment of the present invention may further include a main bracket 642, a support bracket 643, and a shroud 630 in the same manner as the above-described cooling device 600.

The reserve tank 800 installed on the support bracket 643 may be disposed relatively closer to the discharge port 410 than the radiator 620 is. Specifically, the shroud 630 and the fan 610 may be disposed on one side of the radiator 620. In addition, the baffle 641, the main bracket 642, and the support bracket 643 may be disposed on the other side of the radiator 620.

In addition, the discharge port 410 of the construction machine 101 according to an embodiment of the present invention may be formed on a side surface of the hood 400.

The discharge port 410 is formed on the side surface of the hood 400, and a grille may be installed in the discharge port 410 to allow air to be discharged and block an inflow of external foreign substances.

For example, the hood 400 may be formed by a combination of a plurality of housings. In addition, at least one of these housings may include an openable and closable door for easy access of an operator to components installed inside the engine room 401.

By such a configuration, the construction machine 101 according to an embodiment of the present invention includes the cooling device 600 to effectively discharge the air of the engine room 401 to the outside and cool the engine room 401.

Accordingly, it is possible to effectively reduce heat transferred to the driver and into the cabin 300 by the heated air of the engine room 401 disposed adjacent to the driver's seat 310. Therefore, the driver may stably operate the construction machine 101 inside the cabin 300 where the driver's seat 310 is disposed.

Although the embodiments of the present invention have been described above with reference to the accompanying drawings, those skilled in the art to which the present invention pertains will understand that the present invention may be implemented in other specific forms without changing the technical spirit or essential features thereof.

Therefore, the embodiments described above should be understood as illustrative in all respects and not restrictive, and the scope of the present invention is indicated by the following claims rather than the detailed description, and all changes or modified forms derived from the meaning and scope of the claims and equivalent concepts thereof should be construed as being included in the scope of the present invention.

### [INDUSTRIAL APPLICABILITY]

An embodiment of the present invention may provide a cooling device capable of cooling an engine room by discharging air of the engine room to the outside, and a construction machine comprising same.

### [REFERENCE NUMERALS]

| | | | |
|---|---|---|---|
| 101: | Construction machine | 100: | Upper body |
| 300: | Cabin | 310: | Driver's seat |
| 400: | Hood | 401: | Engine room |
| 410: | Discharge port | 420: | Inlet |
| 500: | Engine | | |
| 600: | Cooling device | 610: | Fan |
| 620: | Radiator | 630: | Shroud |
| 640: | Backflow prevention unit | 641: | Baffle |
| 642: | Main bracket | 643: | Support bracket |
| 800: | Reserve tank | | |

## Claims

1. A cooling device for cooling an engine room whose temperature increases according to
an operation of an engine disposed in the engine room, comprising:
a fan for discharging air of the engine room to an outside;
a radiator through which the air of the engine room driven by the fan passes; and
a backflow prevention unit disposed to be spaced apart from the fan with the radiator at a center thereof to prevent a backflow of the air driven by the fan.

2. The cooling device of claim 1, wherein
the backflow prevention unit
includes a baffle supported by the radiator and having at least one region disposed coaxially with a rotation center of the fan.

3. The cooling device of claim 2, wherein
the backflow prevention unit further includes:
a main bracket supported by the radiator to support the baffle; and
a support bracket formed on one side of the baffle to support a reserve tank.

4. The cooling device of claim 1, further comprising
a shroud supported by the radiator to guide the air of the engine room driven by the fan to move to the radiator.

5. The cooling device of claim 1, wherein
the fan is rotated by the engine.

6. A construction machine comprising: an upper body;
a cabin installed on the upper body and in which a driver's seat for a driver to ride is disposed;
a hood disposed on the upper body to be partitioned from the cabin;
an engine room in which an engine is disposed inside the hood;
a discharge port formed to include at least one region among side surfaces of the hood; and
a cooling device including a fan disposed inside the hood communicating with the discharge port to discharge air of the engine room to the discharge port to cool the engine room and operated by the engine, a radiator cooled by the air supplied from the engine room according to an operation of the fan, and a backflow prevention unit disposed coaxially with a rotation center of the fan and spaced apart from the fan with the radiator at a center thereof to prevent the air from flowing backward toward the fan.

7. The construction machine of claim 6, further comprising
an inlet formed by opening one region of a lower portion of the engine room to guide outside air to flow into the engine room when the cooling device operates.

8. The construction machine of claim 6, wherein
the engine is disposed inside the hood behind the driver's seat.
